# EUROPÄISCHE PATENTSCHRIFT

(11) **EP 3 879 995 B1**
(45) Veröffentlichungstag und Bekanntmachung des Hinweises auf die Patenterteilung: **25.02.2026**
(21) Anmeldenummer: 19805619.4
(22) Anmeldetag: 14.11.2019
(51) Int. Cl.: A23J 1/14, A23J 3/14, A23L 5/20

(54) **VERFAHREN ZUR HERSTELLUNG VON PROTEINPRÄPARATEN AUS SONNENBLUMENSAMEN**
PROCESS FOR PRODUCING PROTEIN PREPARATIONS FROM SUNFLOWER SEEDS
PROCÉDÉ DE FABRICATION DE PRÉPARATIONS DE PROTÉINES À PARTIR DE GRAINES DE TOURNESOL

(30) Priorität: 15.11.2018 DE 102018128667
(43) Veröffentlichungstag der Anmeldung: 22.09.2021
(73) Patentinhaber: Fraunhofer-Gesellschaft zur Förderung der angewandten Forschung e.V., 80686 München (DE)
(72) Erfinder: EISNER, Peter, 85354 Freising (DE); MITTERMAIER, Stephanie, 85354 Freising (DE); STÄBLER, Andreas, 85354 Freising (DE)
(74) Vertreter: Gagel, Roland
(86) Internationale Anmeldenummer: PCT/EP2019/081328
(87) Internationale Veröffentlichungsnummer: WO 2020/099565

(56) Entgegenhaltungen:
- DE-A1- 2 546 787
- CLAUDIA PICKARDT ET AL: "Isoelectric protein precipitation from mild-acidic extracts of de-oiled sunflower (L.) press cake", EUROPEAN FOOD RESEARCH AND TECHNOLOGY, SPRINGER BERLIN HEIDELBERG, vol. 233, no. 1, 25 May 2011 (2011-05-25), pages 31 - 44, XP019918510, ISSN: 1438-2385, DOI: 10.1007/S00217-011-1489-6
- ALEXANDRINO THAÍS DOLFINI ET AL: "Fractioning of the sunflower flour components: Physical, chemical and nutritional evaluation of the fractions", LWT- FOOD SCIENCE AND TECHNOLOGY, ACADEMIC PRESS, UNITED KINGDOM, vol. 84, 28 May 2017 (2017-05-28), pages 426 - 432, XP085132237, ISSN: 0023-6438, DOI: 10.1016/J.LWT.2017.05.062

## Beschreibung

### Anwendungsgebiet

Die Erfindung betrifft ein Verfahren zur Gewinnung von funktionellen Proteinpräparaten, insbesondere als Proteinzutaten für Lebensmittel, Heimtiernahrung, Kosmetika und technische Produkte, aus Samen von Sonnenblumenkernen.

### Stand der Technik

Vor dem Hintergrund knapper werdender Agrarflächen und Ressourcen gewinnen pflanzliche Proteinpräparate für die Ernährung des Menschen und für den Einsatz in Tierfutter immer mehr an Bedeutung. Die zunehmende Nachfrage nach hochwertigen Lebens- und Futtermitteln führt zu einem steigenden Bedarf an ernährungsphysiologisch und technofunktionell optimierten Proteinpräparaten, die einfach und kostengünstig bereitgestellt werden können.

Eine kostengünstige Quelle für Lebens- und Futtermittelproteine sind Press- und Extraktionsrückstände aus der Gewinnung von Sonnenblumenöl. Sonnenblumensamen sind gekennzeichnet durch eine feste Schale mit überwiegend dunkler Pigmentierung und durch ein ölhaltiges Fruchtfleisch. Ein Abtrennen der Schalen ist bei diesen Rohstoffen vor der Ölgewinnung möglich, jedoch hat eine vollständige oder weitgehende Abtrennung der Schalen eine Verschlechterung der Ausbeute und Geschwindigkeit in der Ölpressung zur Folge.

Die bei der Sonnenblumenölgewinnung anfallenden Press- und Extraktionsrückstände werden heute vorwiegend als Futtermittel genutzt. Jedoch ist ihr Einsatz in Futtermitteln trotz des hohen Proteingehalts auf wenige Prozent im Futtermittel limitiert. Dies liegt zum einen an einem sehr hohen Schalenanteil im Rückstand, der über 25 Mass.-% betragen kann. Weiterhin ist der Anteil störender Begleitstoffe sehr hoch, vor allem der Gehalt sekundärer Pflanzenstoffe wie z.B. an Polyphenolen, Tanninen oder Phytinsäure. Diese Komponenten können in Summe in den Rückständen über mehrere Mass.-% betragen und beeinträchtigen Farbe, Geschmack und die Verdaubarkeit der Proteine ganz erheblich. Presskuchen und Extraktionsrückstände aus der Gewinnung von Sonnenblumenöl eignen sich daher ohne weitere Maßnahmen nicht zur Herstellung von hochwertigen Proteinzutaten für Lebensmittel oder für Heimtiernahrung.

Sonnenblumensamen werden in der Regel mit dem Fokus auf eine hohe Ölausbeute verarbeitet. Dabei werden sie zunächst von Besatz befreit und hinsichtlich Temperatur und Feuchte konditioniert. Meist wird zudem ein Teil der Schalen entfernt. Anschließend wird der so vorbereitete Rohstoff dann durch Pressen auf Restölgehalte zwischen 8 und 20% mechanisch vorentölt. Anschließend wird mit Hexan oder einem anderen Lösemittel wie Ethanol oder überkritischem CO₂ das restliche Öl aus den Presskuchen extrahiert. Es verbleibt ein Rückstand mit einem Ölgehalt kleiner 3 Mass.-% und einem Proteingehalt, der je nach Schalenanteil zwischen 40 und 55 Mass.-% beträgt.

Nach Stand der Technik werden Sonnenblumensamen überwiegend teilgeschält gepresst. Bei der Teilschälung verbleiben rund 50 Mass.-% der in den Samen enthaltenen Schalen vor der Entölung im Rohstoff, was im Mittel einem Restschalengehalt vor der Pressung von >15 Mass.-% entspricht. Insbesondere zur Pressung wird nach Stand der Technik ein Schalenanteil von mindestens 10 Mass.-% als notwendig erachtet, um die Drainage des Öls aus der Presse zu erleichtern, damit die Pressgeschwindigkeit zu erhöhen und die Kosten zu senken.

Seit einigen Jahren gibt es auch Ansätze, um Proteinpräparate aus den Rückständen der Sonnenblumenölgewinnung in Form von Proteinmehlen oder -konzentraten zu gewinnen und sie somit für Lebensmittel- und hochwertige Futtermittelapplikationen nutzbar zu machen. Einige Veröffentlichungen beschreiben die Herstellung von Proteinpräparaten aus Sonnenblumensamen. Diese Proteinpräparate werden durch trocken- oder nasstechnische Aufbereitung (z.B. unter Einsatz von Lösemitteln) gewonnen, wobei das Protein im Rückstand verbleibt. Der hohe Anteil an unerwünschten Begleitstoffen und der hohe Rohfasergehalt schränken die Verwendung der Rückstände für einige Lebensmittelanwendungen aber ein. Die meisten Proteinmehle und -konzentrate haben daher eine beschränkte Applikationsbreite und sind nur in geringen Konzentrationen in Futtermitteln einsetzbar.

In der EP 2 885 980 B1 wird unter anderem ein Verfahren zur Gewinnung von Sonnenblumenprotein als proteinreiches Nahrungs- oder Futtermittel beschrieben. Zur Herstellung des Futtermittels werden teilgeschälte Sonnenblumenkerne mit einem Restschalengehalt von > 5 Mass.-% eingesetzt. Es erfolgt eine Pressung der Saat auf einen Ölgehalt ≥ 8 Mass.-% bis ≤ 18 Mass.-% und einen Proteingehalt von ≥ 30% bis ≤ 45%, bezogen auf Trockenmasse. Auf den Einfluss des Restschalengehalts > 5 Mass.-% auf die Verdaubarkeit der Proteine wird nicht eingegangen. Zudem ist auch hier davon auszugehen, dass der hohe Rohfasergehalt und der hohe Chlorogensäuregehalt des Produkts dessen Akzeptanz und damit dessen Verwertbarkeit als Futtermittel stark einschränken können.

Die WO 2010097238 A2 beschreibt ein Verfahren zur Herstellung von Proteinpräparaten aus geschälten Sonnenblumenkernen. Bei dem Verfahren werden die Sonnenblumensamen bis auf einen Restschalengehalt von ≤ 5 Mass.-% geschält oder geschälte Sonnenblumensamen mit einem Restschalengehalt von ≤ 5 Mass.-% bereitgestellt. Es erfolgt eine mechanische Teilentölung der geschälten Sonnenblumensamen durch Pressen, die bis auf einen Fett- oder Ölgehalt der geschälten Sonnenblumensamen im Bereich zwischen 10 und 35 Mass.-% durchgeführt wird. Nach Durchführung eines oder mehrerer Extraktionsschritte mit mindestens einem Lösungsmittel wird ein entfettetes proteinhaltiges Mehl als Proteinpräparat erhalten. Das Proteinpräparat weist sowohl optisch als auch funktionell sehr vorteilhafte Eigenschaften auf, die einen direkten Einsatz im Lebens- oder Futtermittelbereich ermöglichen. Durch die niedrigen Temperaturen durch Pressung bei unter 80°C und Desolventierung bei unter 90 °C wird mit diesem Verfahren erreicht, dass gute technofunktionelle Eigenschaften erhalten bleiben, ein geringer Denaturierungsgrad vorliegt und damit eine sehr gute Verdaubarkeit und Bioverfügbarkeit gegeben sein sollten. Der geringe Proteingehalt von 55 bis 65 Mass.-% und der Anteil unlöslicher Ballaststoffe schränkt die Anwendbarkeit der Präparate allerdings deutlich ein, so dass es mit diesen Präparaten beispielsweise nicht möglich ist, proteinreiche Sportlernahrung oder klare Getränke bereit zu stellen.

Seit einiger Zeit sind Schriften zu Präparaten veröffentlicht und auch Proteinpräparate aus Sonnenblumensamen am Markt verfügbar, die einen höheren Proteingehalt von über 70 Mass.-%, zum Teil über 90 Mass.-% aufweisen. Deren Applikationspotenzial ist aufgrund des hohen Anteils an Protein zwar deutlich größer als das der Mehle und Konzentrate, aufgrund von geringen Helligkeitswerten ermittelt gemäß dem L*a*b*-Farbraum als L* unter 60, Verfärbungen (grün, beigebräunliche Farbnuancen), einer geringen Proteinlöslichkeit von <30% und geschmacklichen Defiziten, ist auch mit diesen Präparaten ein breiter Einsatz in sensorisch anspruchsvollen Anwendungen nicht möglich. Zudem sind die Verfahren häufig sehr aufwändig und bestehen aus mehreren Lösemittelextraktionen (z.B. Saeed und Cheryan, 1988, Sunflower Protein concentrates and isolates low in polyphenols and phytates, Journal of Food Science, 53 (4), 1127-1131) und/oder wässrigen Extraktionen unter Einsatz verschiedener pH-Werte und diversen Fällungsschritten. Häufig werden dabei zudem die Sonnenblumenkerne zwar geschält, aber anschließend direkt mit Lösemitteln ohne vorherige mechanische Teilentölung entölt, was die Wirtschaftlichkeit und industrielle Umsetzbarkeit der Verfahren weiter reduziert.

Weiterhin sind Ansätze bekannt, bei denen mit Hilfe des Zusatzes von Kochsalz oder anderen Salzen die Löslichkeit des Sonnenblumenproteins bei der extraktiven Gewinnung verbessert werden soll (Pickardt et al. 2009, Optimisation of mild-acidic protein extraction from defatted sunflower (Helianthus annuus L.) meal, Food Hydrocolloids, 23 (7), 1966-1973; Pickardt et al. 2015, Pilot plant preparation of lightcoloured protein isolates from de-oiled sunflower (Helianthus annuus L.) press cake by mild-acidic protein extraction and polyphenol adsorption, Food Hydrocolloids, 44, 208-219). Auch die Veröffentlichung von CLAUDIA PICKARDT et al.: "Isoelectric protein precipitation from mild-acidic extracts of de-oiled sunflower (L.) press cake", EUROPEAN FOOD RESEARCH AND TECHNOLOGY, Bd. 233, Nr. 1, 2011, Seiten 31-44, beschreibt ein Verfahren zur Herstellung eines Proteinpräparates, bei dem die Proteinextraktion bei einem pH-Wert von 6 in einer konzentrierten Kochsalzlösung (2.0 mol/l) erfolgt. Derartige Präparate weisen aber nach der Extraktion in mit Salz konzentrierten wässrigen Lösungen einen sehr salzigen Geschmack auf, so dass auch derartige Verfahren nicht zu ansprechenden Präparaten führen und zudem sehr hohe Kosten verursachen.

### Aufgabe der vorliegenden Erfindung

Die Aufgabe der vorliegenden Erfindung bestand darin, ein wirtschaftliches Verfahren für die Herstellung von qualitativ hochwertigen und sensorisch ansprechenden Proteinpräparaten mit guten technofunktionellen Eigenschaften aus Sonnenblumensamen mit einem Proteingehalt größer 75 Mass.-% bereitzustellen. Die Präparate sollten farblich sowie geschmacklich sehr ansprechend sein und gute technofunktionelle Eigenschaften aufweisen. Zudem sollen sie durch ihren hohen Proteingehalt vielseitig in Lebensmitteln und Futtermitteln einsetzbar sein.

### Beschreibung der Erfindung

Die Aufgabe wird mit dem Verfahren nach Anspruch 1 gelöst. Vorteilhafte Ausgestaltungen des Verfahrens sind Gegenstand der abhängigen Patentansprüche.

Mit dem im Folgenden beschriebenen Verfahren gelingt es überraschenderweise, mindestens zwei proteinreiche Fraktionen aus Sonnenblumensamen, von denen eine einen Proteingehalt größer 75 Mass.-% aufweist, in einem Verarbeitungsprozess zu gewinnen. Diese beiden oder mehr Fraktionen erfüllen hohe sensorische Anforderungen und enthalten in Summe mehr als 50 Mass.-%, in vorteilhaften Ausgestaltungen mehr als 70 Mass.-%, besonders vorteilhaft mehr als 90 Mass.-% des in den Prozess eingetragenen Proteins aus Sonnenblumenmehl, wobei das Sonnenblumenmehl einen Proteingehalt > 35 Mass.%, bevorzugt zwischen 45 und 60 Mass.-%, besonders vorteilhaft zwischen 48 und 57 Mass.-% aufweist. Die Nutzung eines hohen Anteils der im Input des Verfahrens zugesetzten Proteine ermöglicht ein hohes Maß an Wirtschaftlichkeit im Vergleich zu bestehenden Verfahren nach Stand der Technik, da anders als bei anderen Verfahren mehrere Fraktionen als proteinreiche und sensorisch ansprechende proteinreiche Lebensmittelzutaten genutzt werden können.

Für das erfindungsgemäße Verfahren wird zunächst proteinhaltiges Mehl bereitgestellt, das aus geschälten und entölten Sonnenblumenkernen gewonnen wurde, wobei die Entölung zumindest einen mechanischen Schritt mit einer Schneckenpresse oder einem Extruder und ggf. eine Entölung mit organischen Lösemitteln wie Ethanol oder Hexan umfasst, einen Ölgehalt kleiner 8 Mass.-%, vorteilhaft kleiner 4 Mass.-%, besonders vorteilhaft kleiner 2 Mass.-% (jeweils bestimmt mit der Soxhlet-Methode AOAC 963.15), und einen Schalenanteil kleiner 10 Mass.-%, vorteilhaft kleiner 5 Mass.-%, besonders vorteilhaft kleiner 1 Mass.-% oder kleiner 0,1 Mass.-% aufweist. Das zum Einsatz kommende Mehl ist gekennzeichnet durch einen Proteingehalt über 35 Mass.-%, vorteilhaft größer 45 Mass.-%, besonders vorteilhaft größer 48 Mass.-% in Trockenmasse (ermittelt nach Dumas § 64 LFBG L 01.00-60 mit einem Verhältnisfaktor von 6,25), und durch eine gute Proteinlöslichkeit.

Vorzugsweise kommt ein Mehl zum Einsatz mit einer Proteinlöslichkeit bei pH 6 in Wasser größer 15 Mass.-%, vorteilhaft größer 20 Mass.-%, besonders vorteilhaft größer 25 Mass.-% und/oder einer Proteinlöslichkeit in Wasser bei pH 7 von größer 25 Mass.-%, vorteilhaft größer 30 Mass.-%, besonders vorteilhaft größer 35 Mass.-% bezogen auf den Proteingehalt im Mehl. Die Proteinbestimmung zur Ermittlung der Proteinlöslichkeit erfolgt dabei in Anlehnung an die Proteinlöslichkeitsbestimmung nach C. V. Morr und die Bestimmung des NSI-Wertes nach der offiziellen AOCS Methode (Ba 11-65; 1993) bzw. AACC (46-23; 1990).

Um ein Mehl mit einer derart hohen Proteinlöslichkeit bereitstellen zu können, sind besonders schonende Bedingungen bei der Entölung mit Schneckenpressen oder Extrudern und mittels Lösemitteln und eine weitgehende Reduktion von störenden Fremdstoffen, die die Löslichkeit beeinflussen können, zu gewährleisten. Überraschenderweise zeigt sich aber, dass beim zum Einsatz kommenden Mehl ein gewisser Restlösemittelgehalt sich nicht, wie erwartet, negativ auf die Proteinlöslichkeit im Mehl auswirkt, sondern vielmehr gewisse Mengen an Lösemittel im Mehl sich positiv auf den späteren Weiterverarbeitungsprozess auswirken. Die Löslichkeit ist dabei besonders gut bei einem Restgehalt an mindestens einem organischen Lösemittel (Ethanol oder Propanol oder Methanol oder Hexan) größer als 0,001 Mass.-%, vorteilhaft größer 0,01 Mass.-%, besonders vorteilhaft größer 0,05 Mass.-% oder 0,1 Mass.-%. Es zeigt sich, dass innerhalb dieses Konzentrationsbereiches mit einer oberen Grenze von etwa 1 Mass-% mit zunehmendem Lösemittelanteil im Mehl die Löslichkeit des Proteins steigt.

Die Partikel des Mehls werden vorteilhaft vor der Extraktion fein vermahlen. Dabei liegt der D90 (90%-Anteil der Masse der Partikel kleiner der angegebenen Partikelgröße (Bestimmung über Laserbeugung in n-Butanol) im Bereich von 100 µm bis 2500 µm, vorteilhaft ist der D90 kleiner als 500 µm oder kleiner als 250 µm. Das Auflösen der Proteine aus dem Mehl kann weiter beschleunigt werden, wenn der D90 z.B. durch weiteres Feinvermahlen auf unter 100 µm reduziert wird, besonders vorteilhaft auf kleiner 50 µm.

Die hohe Proteinkonzentration im Mehl und vorzugsweise gute Löslichkeit des enthaltenen Proteins sind von Vorteil, da im weiteren Verlauf des erfindungsgemäßen Verfahrens ein wässriger Extraktionsschritt durchgeführt wird. Die hohe Proteinlöslichkeit wird erreicht, indem ein Mehl zum Einsatz kommt, bei dem die Temperaturen beim Pressen, bei der Entölung mit organischen Lösemitteln und bei der Desolventierung nicht zu hoch eingestellt werden, damit die Löslichkeit der Proteine im Rückstand auf einem hohen Niveau verbleibt. Wenn alle diese Schritte bei Temperaturen kleiner 120 °C erfolgen, besser kleiner 100°C, besonders vorteilhaft kleiner 80°C, kann eine thermische Schädigung weitgehend vermieden und die Proteinlöslichkeit erhalten werden. Daher sollten vorteilhaft Mehle zum Einsatz kommen, die unterhalb der genannten Temperaturen gepresst, entölt und desolventiert wurden.

Wie bereits weiter oben angeführt, weist das proteinhaltige Mehl aus entölten Sonnenblumenkernen einen Schalengehalt kleiner 10 Mass.-%, vorteilhaft kleiner 5 Mass.-%, oder kleiner 1 Mass.-%, besonders vorteilhaft kleiner 0,5 oder gar 0,1 Mass.-% auf. Besonders schalenfreie oder nahezu schalenfreie Mehle ermöglichen es, nach der erfindungsgemäßen ein- oder mehrmaligen Extraktion sowohl das Protein aus dem oder wenigstens einem der Extrakte als auch das Protein aus dem verbleibenden Raffinat für Lebensmittelanwendungen zu nutzen.

Bei dem erfindungsgemäßen Verfahren erfolgt wenigstens eine wässrige Extraktion mit dem bereitgestellten Sonnenblumenmehl. Dafür werden das Mehl und eine definierte Menge an Wasser im Überschuss (bspw. Verhältnis Wasser zu Mehl größer 3:1, besser größer 5:1, besonders vorteilhaft gleich oder größer 10:1) in einem Rührbehältnis gemischt, eine Zeit lang in Suspension gehalten (vorteilhaft zwischen 10 und 60 Minuten) und die Suspension nachfolgend mit einer kontinuierlich arbeitenden Zentrifuge, vorzugsweise mit einem Dekanter, in eine flüssige Phase (Extrakt) und eine feststoffreiche Phase (Raffinat) getrennt. Die Extraktion, die Trennung beider Phasen und die weitere Behandlung und ggf. Trocknung beider Fraktionen erfolgt dabei unter weitgehendem Ausschluss von Sauerstoff und/oder unter Zugabe von Antioxidantien und/oder Reduktionsmitteln, so dass es gelingt, nach der Extraktion und ggf. Trocknung sowohl aus dem Extrakt (oder einem der Extrakte) als auch bei ausreichend geringem Schalenanteil aus dem Raffinat je ein hochwertiges, helles Proteinpräparat mit guten technofunktionellen Eigenschaften zu gewinnen. Dabei zeigen beide Fraktionen nach analysenfeiner Vermahlung einen L*-Wert größer 70, in vorteilhaften Ausgestaltungen größer 80, besonders vorteilhaft größer 90 auf, bezogen auf den L*a*b*-Farbraum.

Um eine simultane Gewinnung von zwei hochwertigen Proteinpräparaten mit heller Farbe aus dem Mehl zu erreichen, sind, wie bereits erwähnt, zum einen ein geringer Schalenanteil sowie ein hoher Proteinanteil im Mehl erforderlich. Durch eine gute Proteinlöslichkeit (Löslichkeitsparameter wie oben beschrieben) können die Ergebnisse nochmals verbessert werden. Zum anderen muss die Extraktion erfindungsgemäß so durchgeführt werden, dass eine Oxidation der Komponenten der Sonnenblumenkerne weitgehend vermieden wird oder die zur Oxidation neigenden Komponenten aus den beiden Fraktionen, z.B. in einer wässrigen Vorextraktion des Mehls, weitgehend abgetrennt werden.

Dies kann besonders vorteilhaft erreicht werden, indem mindestens eine wässrige Extraktion - vorzugsweise bei pH-Werten kleiner 6 - unter Luftausschluss, also nach Anlegen eines Vakuums oder nach Zusatz von Stickstoff, Argon, CO₂ oder anderen Inertgasen, und/oder mittels Einsatz von für Lebensmittel zugelassenen Antioxidantien und/oder Reduktionsmitteln wie Natriumhydrogensulfit, Natriumsulfit oder Cystein erfolgt. Wenn die Oxidation weitgehend reduziert oder vollständig vermieden wird, zeigt sich, dass sowohl die aus dem Extrakt gewonnene Proteinfraktion als auch das Raffinat nach einer Trocknung und analysenfeiner Vermahlung einen L*-Wert von über 70 aufweisen. Es ist bei völligem Ausschluss von Sauerstoff und Einsatz von Antioxidantien und/oder Reduktionsmitteln auch möglich, in beiden Fraktionen L*-Werte über 80 zu erreichen. Dies ist nach Stand der Technik bisher nicht gegeben.

Eine Extraktion bei reduziertem Luftdruck (Vakuum) wird vorteilhaft so durchgeführt, dass der Druck in der Gasphase der geschlossenen Extraktionsbehälter auf kleiner 200 mbar, besser kleiner 100 mbar eingestellt wird. Dabei sollte als Zielparameter die Sauerstoffkonzentration im Wasser oder Extrakt betrachtet werden. Es ist vorteilhaft anzustreben, die O₂-Konzentration im für die Extraktion genutzten Wasser oder direkt im Extrakt auf Werte unter 7 mg/l, vorteilhaft unter 3 mg/l, besonders vorteilhaft unter 0,5 mg/l oder besser unter 0,1 mg/l abzusenken.

Sollte eine Absenkung unter diese Werte im Vakuum nicht gelingen, zeigen sich hinsichtlich der Farbe bzw. Helligkeit der Proteinpräparate besondere Vorteile, wenn im für die Extraktion genutzten Wasser durch Einblasen von hochkonzentriertem (> 90 Vol.%) Stickstoff oder Argon und/oder eine Behandlung mit Ultraschall der gelöste Sauerstoff aus dem Wasser weitgehend entfernt und die Sauerstoffkonzentration damit unter die obigen Werte abgesenkt wird. Dabei können vorteilhaft Werte für gelösten Sauerstoff unterhalb von 0,1 mg/l erreicht werden, in einigen Fällen sogar unter 0,05 mg/l, was den Umfang der Verfärbung deutlich limitiert.

Als alternativer oder zusätzlicher Schritt ist es von Vorteil, Ascorbinsäure, Zitronensäure oder ein anderes farbloses, wasserlösliches Antioxidans und/oder Reduktionsmittel wie Natriumhydrogensulfit, Cystein o.ä. in das für die Extraktion genutzte Wasser zu geben und damit ebenfalls eine Dunkelfärbung zu unterdrücken und hellere Präparate zu gewinnen. Ob der Zusatz von Antioxidantien und/oder Reduktionsmitteln ausreichend ist, um die Oxidation zu unterdrücken, oder ob die oben beschriebenen weiteren Maßnahmen zur zusätzlichen Reduktion der Sauerstoffkonzentration erforderlich sind, kann je nach gewünschtem Ergebnis variabel gestaltet werden. Weiterhin zeigte sich überraschenderweise, dass durch den Zusatz von Reduktionsmitteln einige Funktionalitäten wie die Löslichkeit und das Emulgierverhalten der Präparate verbessert wurde.

Zur Durchführung des Verfahrens werden die zur Vermeidung der Oxidation genannten Methoden idealerweise miteinander kombiniert.

Im Vergleich zeigt sich, dass sich die Farbe der Präparate deutlich verdunkelt, wenn ohne die beschriebenen Maßnahmen ein pH-Wert bei der Extraktion von 7,5 oder größer gewählt wird. Bei einer Ausgestaltung des erfindungsgemäßen Verfahrens, bei der obige Maßnahmen kombiniert werden, d.h. nach Ausblasen des Sauerstoffs bspw. mittels Stickstoff (Stickstoffgehalt größer 90 Vol.-%) oder Argon und Zusatz von bspw. 0,01 bis 1 g Ascorbinsäure und/oder 0,01 bis 1g Cystein oder Cystin pro Liter Wasser für die Extraktion zeigt sich, dass auch bei Einstellen des pH-Wertes im Extrakt auf Werte 2`über 8,5 noch immer helle Proteinpräparate erhalten werden können, wenn der Extrakt einer Ultra- und/oder Diafiltration unterzogen wird. Eine besonders helle Farbe kann auch nach Absenken des Druckes bei der Extraktion auf Werte kleiner 50 mbar beobachtet werden. Die Kombination aus sauerstoffarmen oder -freiem Extrakt, dem Zusatz von Antioxidantien und/oder Reduktionsmittel und dem Einsatz der Ultrafiltration und vorteilhaft auch der Diafiltration des Extraktes erweist sich dabei als eine besonders effiziente Verfahrenskombination, um zu erreichen, dass die aus dem Extrakt gewonnene Proteinfraktion nach Trocknung auch farblich lagerstabil ist, d.h. während der Lagerung keine Vergrauung oder andere Art der dunklen Verfärbung erfährt.

Es hat sich herausgestellt, dass auch eine vorherige Behandlung des Mehles zur Reduktion des Luft- bzw. Sauerstoffgehaltes weitere Vorteile bringt, besonders, wenn das für die Extraktion genutzte Wasser bereits weitgehend von gelöstem Sauerstoff befreit ist. So zeigt sich, dass aus Sonnenblumenmehl, das mittels Vakuum unter 200 mbar, vorteilhaft unter 50 mbar, oder mittels Einblasen von Stickstoff (oder einem anderen hierzu geeigneten Gas) vor dem Einbringen in die Extraktion behandelt wurde, hellere Proteinpräparate erhalten werden können, als wenn das Mehl vorher nicht von Luft, die in der Schüttung enthalten ist, befreit wurde. Vorzugsweise sollte der Sauerstoffpartialdruck im Mehl auf unter 50 mbar reduziert werden, besser unter 20 mbar, besonders vorteilhaft unter 10 mbar.

Nach dem vollständigen oder teilweisen Abtrennen des Sauerstoffs aus dem Wasser, wobei der Vorgang noch durch Erwärmen des sauerstoffhaltigen Wassers auf Temperaturen über 20°C, vorteilhaft über 40°C, besonders vorteilhaft über 50°C unterstützt werden kann, vor oder während der Extraktion kann der pH-Wert während des Extraktionsvorgangs erfindungsgemäß zwischen 4 und 7 eingestellt werden. Dies kann vom Gehalt an Sauerstoff im Wasser bestimmt werden aber auch hinsichtlich des gewünschten Trennergebnisses optimiert werden. Bei Sauerstoffgehalten über 5 mg/l liegt der pH-Wert erfindungsgemäß unterhalb von 6,5, vorteilhaft unterhalb von 6.

Das heißt aber nicht, dass die höchst möglichen pH-Werte in jedem Fall gewählt werden sollten, wenn die genannten Sauerstoffwerte unterschritten werden. Vielmehr kann ein niedriger O₂-Wert auch unterhalb von 0,1 mg/l eingestellt werden und zusätzlich Antioxidantien und/oder Reduktionsmittel zum Einsatz kommen und dennoch ein pH-Wert von 6 ausgewählt werden, um spezifische Eigenschaften, eine definierte Proteinzusammensetzung oder eine besonders helle Farbe zu erreichen. Da bei pH 6 nur die Albumine aus Sonnenblumensamen in Lösung gehen, kann es somit von Vorteil sein, den pH auf 6 einzustellen und nur die Albumine zu gewinnen.

In einer besonders vorteilhaften Ausgestaltung des Verfahrens erfolgt die Einstellung des pH-Wertes durch die zugegebenen Antioxidantien wie beispielsweise Ascorbinsäure.

Die Extraktion erfolgt beim erfindungsgemäßen Verfahren vorzugsweise mit einem Mehl, das vor der Extraktion auf eine definierte Partikelgrößenverteilung zerkleinert und dem eine gewisse Menge Wasser zur Extraktion zugesetzt wird. Nach der Extraktion erfolgt eine Trennung zwischen Raffinat und Extrakt. Zur weitergehenden Extraktion von Protein erfolgt vorteilhaft eine weitere wässrige Extraktion mit dem Raffinat. Nach mindestens einer Separation von Extrakt und Raffinat wird das Raffinat einer Trocknung und ggf. Vermahlung zugeführt, um eine bevorzugte Partikelgrößenverteilung zu erreichen, wie sie bereits weiter oben bei der vorzugsweisen Vermahlung des Mehls angegeben wurde. Der Extrakt wird vorzugsweise entweder mittels Ultrafiltration oder Diafiltration (oder beidem) weitgehend von Anteilen an Zuckern und anderen Verbindungen mit entsprechend kleiner Molekülgröße befreit oder es erfolgt eine Aufkonzentrierung der Proteine durch Ausfällen, vorzugsweise am isoelektrischen Punkt der Proteine, und/ oder Ultrafiltration. Anschließend wird das aufkonzentrierte Protein beispielsweise durch Trocknung oder Einfrieren stabilisiert und ggf. nachfolgend durch Vermahlung auf die oben genannte Partikelgrößenverteilung eingestellt.

Das Proteinpräparat aus dem Raffinat weist dabei einen Proteingehalt größer 25 Mass.-%, vorteilhaft größer 40 Mass.-%, besonders vorteilhaft größer 50 Mass.-% auf und einen Gehalt von kleiner 6 Mass.-% an Zuckern (Summe der Mono-, Disaccharide), vorteilhaft kleiner 1 Mass.-%, besonders vorteilhaft kleiner 0,5 Mass.-%. Die aus dem Raffinat gewonnene Proteinfraktion hat zudem einen Gehalt an Chlorogensäure von kleiner 1 Mass.-%, vorteilhaft kleiner 0,5 Mass.-%, besonders vorteilhaft kleiner 0,1 Mass.-%.

Eine so niedrige Konzentration an Chlorogensäure unter 0,1 Mass.-% in Verbindung mit einem relativ hohen Proteingehalt von vorzugsweise über 50 Mass.-% in dem aus dem Raffinat gewonnenen Proteinpräparat hat im Vergleich zu bislang bekannten schalenfreien Mehlen mit ähnlichen Proteingehalten den Vorteil, dass es zu keiner Verfärbung kommt, wenn in einer Lebensmittelapplikation oder einer kosmetischen Anwendung oder in Heimtiernahrung ein neutraler oder alkalischer pH-Wert eingestellt wird oder wenn das Produkt für einen längeren Zeitraum gelagert wird. Derartige pH-Werte oder lange Lagerzeiten können bei konventionellen Mehlen nach Stand der Technik ohne Verfärbung nicht gewählt werden.

Bei Einsatz sauerstoffreduzierter und oxidationsminimierter Extraktionsbedingungen gelingt es somit überraschenderweise, ein hochwertiges helles Präparat aus dem Raffinat herzustellen und gleichzeitig einen Extrakt zu erhalten, aus dem, insbesondere mittels Ultrafiltration und/oder Diafiltration und/oder Fällung, ein neutrales und helles Proteinkonzentrat mit über 75 Mass.-% Proteinanteil oder sogar ein Proteinisolat mit einem Proteingehalt von über 90 Mass.-% erhalten werden kann.

Auch hierbei zeigt sich der Vorteil der erfindungsgemäßen Reduktion des Sauerstoffanteils bzw. der Oxidationsreduktion. Wenn diese Maßnahmen gewählt werden, gelingt eine Ultrafiltration von Zuckern und anderen Verbindungen mit geringer Molekülmasse auf der einen Seite und von Proteinen mit einer Molekülmasse über 1000 Da auf der anderen Seite sehr viel effektiver, als wenn dies nicht der Fall ist. Dies ist mit einer Membrantrennung nicht möglich, wenn die erfindungsgemäßen oxidationslimitierenden Maßnahmen nicht gewählt werden. Es ist mit dem erfindungsgemäßen Verfahren auch einfacher möglich, Adsorber zur Abtrennung von störenden Komponenten aus dem Extrakt einzusetzen. Durch die weitgehend oxidationsfreie Umgebung lagern sich weniger Proteine an den Oberflächen der Adsorbentien ab.

Es zeigt sich, dass auch aus entölten Mehlen mit dunkler Farbe, die einen Schalengehalt bis nahe 10% aufweisen können, sehr helle Proteinpräparate mit L*-Werten über 70, vorteilhaft über 80 erhalten werden können.

Bei dem vorgeschlagenen Verfahren wird ein Präparat mit folgenden Eigenschaften aus dem Extrakt oder wenigstens einem der Extrakte erhalten:
- Proteingehalt größer 75 Mass.-%, bevorzugt größer 80 Mass.-% besonders bevorzugt größer 90 Mass.-%
- helles optisches Erscheinungsbild mit L*-Werten aus dem L*a*b*-Farbraum größer 70, vorteilhaft größer 80, besonders vorteilhaft größer 90
- Emulgierkapazität größer 200, vorteilhaft größer 400, besonders vorteilhaft größer 500 ml Öl/g Protein,
- Löslichkeit der Proteine bei pH 7 größer 10 Mass.-%, besser größer 30 Mass.-%, besonders vorteilhaft größer 40 Mass.-% oder 50 Mass.-, bezogen auf den Proteingehalt im Präparat
- Vorzugsweise eine Partikelgrößenverteilung mit einem D90-Wert (Menge der Partikel unter der Größe entspricht 90 %): kleiner 500 µm, vorteilhaft kleiner 250 µm, besonders vorteilhaft kleiner 100 µm

Aus dem Raffinat wird ein Präparat mit folgenden Eigenschaften erhalten:
- Proteingehalt größer 25 Mass.-%, vorteilhaft größer 40 Mass.-% besonders vorteilhaft größer 50 Mass.-%
- helles optisches Erscheinungsbild mit L*-Werten aus dem L*a*b*-Farbraum größer 70, vorteilhaft größer 80, besonders vorteilhaft größer 90
- Emulgierkapazität größer 250, vorteilhaft größer 400, besonders vorteilhaft größer 500 ml Öl/g Protein
- Löslichkeit der Proteine bei pH 7 größer 5 Mass.-%, besser größer 20 Mass.-%, besonders vorteilhaft größer 30 Mass.-%, bezogen auf den Proteingehalt im Präparat
- Wasserbindung > 1 g pro g getrocknetem Raffinat
- Vorzugsweise eine Partikelgrößenverteilung mit einem D90-Wert: kleiner 1000 µm, vorteilhaft kleiner 500 µm, besonders vorteilhaft kleiner 250 um
- Vorzugsweise einen Polyphenolgehalt im Raffinat < 1 Mass-%, vorteilhaft < 0,5 Mass-% und besonders vorteilhaft < 0,1 Mass-% (Bestimmungsmethode: Weisz et al. 2009, Identification and quantification of phenolic compounds from sunflower (Helianthus annuus L.) kernels and shells by HPLC-DAD/ESI-MS, Food Chemistry, 115 (2), 758 - 765)
- Vorzugsweise einen Restgehalt an organischem Lösemittel von < 50 mg/kg, besonders vorteilhaft von < 10 mg/kg

Zusammenfassend werden beim vorgeschlagenen Verfahren folgende Verfahrensschritte durchgeführt:
1) Bereitstellen von proteinhaltigem Mehl aus entölten Sonnenblumenkernen mit einem Proteingehalt > 35 Mass.-%, Ölgehalten kleiner 8 Mass.-%, vorteilhaft kleiner 4 Mass.-%, besonders vorteilhaft kleiner 2 Mass.-% (Soxhlet-Methode AOAC 963.15) und Schalengehalten kleiner 10 Mass.-%, vorteilhaft kleiner 5 Mass.-%, besonders vorteilhaft kleiner 1 Mass.-% oder kleiner 0,1 Mass.-%, vorzugsweise mit einer Proteinlöslichkeit bei pH 6 von größer 15 Mass.-%, vorteilhaft größer 20 Mass.-% bezogen auf Protein im Mehl und/oder einer Proteinlöslichkeit in Wasser bei pH 7 von größer 25 Mass.-%, vorteilhaft größer 30 Mass.-%, besonders vorteilhaft größer 35 Mass.-% bezogen auf den Proteingehalt im Mehl
2) Extraktion des Mehls mit Wasser im pH-Bereich größer 4, vorteilhaft größer 5, besonders vorteilhaft größer 6 aber kleiner 7
3) Vorher oder währenddessen Reduktion der Sauerstoffkonzentration im Wasser auf Werte kleiner 7 mg/l, vorteilhaft kleiner 2 mg/l, besonders vorteilhaft kleiner 0,5 mg/l oder kleiner 0,1 mg/l und/oder Absenkung der Oxidationsaktivität durch einen oder mehrere der folgenden Schritte:
   a. Reduktion des Luftdrucks in den Extraktionsbehältern auf kleiner 200 mbar, besser kleiner 100 mbar und/oder
   b. Einstellen der Temperatur des Wassers, das für die Extraktion genutzt werden soll, auf Werte über 20°C, vorteilhaft über 40°C, besonders vorteilhaft über 50°C, wodurch gelöster Sauerstoff entweicht, und/oder
   c. Einblasen von Stickstoff, CO₂, Argon oder einem anderen Inertgas mit einer Konzentration über 90 Vol.-%, vorteilhaft größer 99 Vol.-%, durch Einleiten in das für die Extraktion genutzte, vorteilhaft auf über 20°C erwärmte Wasser oder in den Extrakt oder durch in Kontaktbringen mit dem Wasser oder mit dem Extrakt durch Bereitstellen von Stickstoff, CO₂, Argon oder einem anderen Inertgas oberhalb der Wasser-/Extraktoberfläche, so dass Stickstoff, CO₂, Argon bzw. das Inertgas den im Wasser/Extrakt gelösten Sauerstoff verdrängt und im Falle vom Stickstoff eine N₂-Konzentration größer 10 mg/l, vorteilhaft größer 15 mg/l, besonders vorteilhaft größer 20 mg/l entsteht und/oder
   d. Zusatz antioxidativ und/oder reduktiv wirksamer Komponenten (z.B. Zitronensäure, Ascorbinsäure, Sulfite, Cystein oder andere) vor oder während der Extraktion
4) Vorzugsweise: Einstellen des pH-Wertes im Wasser auf Werte zwischen 5,5 und 6,5
5) Trennen von Feststoff und Extrakt
6) Vorzugsweise: Wiederholen des Vorgangs der Extraktion bei einem höheren pH-Wert, besonders vorteilhaft erste Extraktion bei pH-Werten zwischen 5,5 und 7 und zweite Extraktion bei pH-Werten zwischen 7,5 und 9
7) Vorzugsweise: Aufkonzentrieren der Proteine im Extrakt durch Fällung oder Ultrafiltration und/oder Diafiltration
8) Ggf. Trocknung des Extrakts und (optional) des Raffinats oder der aufkonzentrierten Proteinfraktionen und optional Vermahlen, um eine gewünschte Partikelgrößenverteilung zu erreichen.

### Ausführungsbeispiel:

### Durchführung:

Sonnenblumenmehl aus geschälter Saat mit Schalenanteil kleiner 1 Mass.-% (Proteinanteil 55%; Proteinlöslichkeit 40%; Ölgehalt 2,5 Mass.-%) wird im Verhältnis 1:10 (bezogen auf Trockensubstanz des Mehls) in dest. Wasser suspendiert. Das hierfür verwendete Wasser wurde vor der Verwendung 1 Stunde mit Stickstoff durchströmt/gespült, um darin gelösten Sauerstoff auszutreiben. Zudem wurde der pH-Wert des Wassers vor Zugabe des Mehls mit Ascorbinsäure auf 6 eingestellt. Nach Zugabe des Mehls zum Wasser wurde der pH-Wert auf 6 nachjustiert und anschließend 30min bei Raumtemperatur gerührt.

Nach Ablauf dieser Vorextraktion wurde die Suspension 10 Minuten bei 8570g und 20°C zentrifugiert. Der Rückstand der Zentrifugation wurde wie oben beschrieben erneut bei pH6 extrahiert (2. Vorextraktion) und wie oben zentrifugiert. Durch diese Vorextraktionen werden u.a. unerwünschte phenolische Komponenten aus dem Mehl entfernt. Der Rückstand der Zentrifugation wurde anschließend erneut im Verhältnis 1:10 (bezogen auf die Trockenmasse) in Wasser suspendiert und mit Natronlauge ein pH-Wert von 8,5 eingestellt. Anschließend wurde die Suspension zur Extraktion der Proteine 30min bei Raumtemperatur gerührt. Das hierzu verwendete Wasser wurde vor der Verwendung für 1 Stunde mit Stickstoff gespült.

Nach Ende der Proteinextraktion wurden Rückstand (Raffinat) und Überstand (Extrakt) durch Zentrifugation (10min, 20°C, 8570g) getrennt. Das Raffinat wurde durch Gefriertrocknung stabilisiert, während der zuletzt erhaltene Extrakt einer Proteinfällung zugeführt wurde.

Für die Proteinfällung wurde der pH-Wert des Extraktes mit Ascorbinsäure auf 6 eingestellt und 30min bei Raumtemperatur gerührt. Anschließend erfolgte die Gewinnung der ausgefällten Proteine durch Zentrifugation (10min, 20°C, 8570g). Der so gewonnene Proteinquark wurde zur Stabilisierung gefriergetrocknet.

### Produkte:

a) Proteinprodukt aus Extraktphase:
   - Proteingehalt: 85%
   - Proteinlöslichkeit (pH 7): 12%
   - Emulgierkapazität: 230mL Öl/g
   - L*-Wert (L*a*b Farbraum): 80
b) Raffinat:
   - Proteingehalt: 40%
   - Proteinlöslichkeit (pH7): 25%
   - Wasserbindung: 1,2 g/g
   - Emulgierkapazität: 485 mL Öl/g
   - L*-Wert (L*a*b Farbraum): 80
   - Polyphenolgehalt: 0,2 Massen-%

## Patentansprüche

1. Verfahren zur Herstellung von Proteinpräparaten aus Sonnenblumensamen mit wenigstens folgenden Schritten:
- Bereitstellen eines proteinhaltigen Mehls aus geschälten und entölten Sonnenblumenkernen, das
-- einen Schalengehalt < 10 Mass.-%,
-- einen Ölgehalt < 8 Mass.-%,
-- einen Proteingehalt > 35 Mass.-% und
- Durchführen wenigstens eines oder mehrerer Extraktionsschritte mit Wasser bei einem pH-Wert größer 4 und kleiner 7 mit dem proteinhaltigen Mehl, nach dem oder denen eine flüssige Phase als Extrakt und eine feststoffreiche Phase als Raffinat erhalten wird,
- Trennen des Extrakts und des Raffinats, und
- Aufkonzentrieren und/oder Trocknen des Extrakts und Trocknen des Raffinats,
- wobei vor und/oder während des einen oder der mehreren Extraktionsschritte eine Sauerstoffkonzentration im Wasser auf einen Wert < 7 mg/l reduziert und/oder eine Oxidationsaktivität durch Zugabe von antioxidativ wirksamen Komponenten zum Wasser abgesenkt wird und/oder reduktiv wirkende Komponenten zugegeben werden.

2. Verfahren nach Anspruch 1,
**dadurch gekennzeichnet,**
**dass** das proteinhaltige Mehl eine Proteinlöslichkeit in Wasser bei pH 6 von > 15 Mass.-% und/oder bei pH 7 von > 25 Mass.-% bezogen auf den Proteingehalt im Mehl aufweist.

3. Verfahren nach Anspruch 1 oder 2,
**dadurch gekennzeichnet,**
**dass** zur Reduktion der Sauerstoffkonzentration im Wasser der eine oder die mehreren Extraktionsschritte bei einem auf < 200 hPa reduzierten Luftdruck erfolgen.

4. Verfahren nach einem der Ansprüche 1 bis 3,
**dadurch gekennzeichnet,**
**dass** zur Reduktion der Sauerstoffkonzentration im Wasser Stickstoff, Kohlendioxid, Argon oder ein anderes Inertgas mit einer Konzentration von über 90 Vol.-% vor und/oder während des einen oder der mehreren Extraktionsschritte in das Wasser eingeblasen oder in Kontakt mit der Wasseroberfläche gebracht wird.

5. Verfahren nach einem der Ansprüche 1 bis 4**,**
**dadurch gekennzeichnet,**
**dass** die Sauerstoffkonzentration im Wasser durch eine Behandlung mit Ultraschall reduziert wird.

6. Verfahren nach einem der Ansprüche 1 bis 5,
**dadurch gekennzeichnet,**
**dass** zur Reduktion der Sauerstoffkonzentration im Wasser eine Temperatur des Wassers auf einen Wert über 20° C eingestellt wird.

7. Verfahren nach einem der Ansprüche 1 bis 6,
**dadurch gekennzeichnet,**
**dass** ein Sauerstoffgehalt des proteinreichen Mehls vor dem einen oder den mehreren Extraktionsschritten mittels Vakuum oder durch Einblasen von Kohlendioxid oder eines Inertgases reduziert wird.

8. Verfahren nach Anspruch 7,
**dadurch gekennzeichnet,**
**dass** die Reduktion des Sauerstoffgehaltes des proteinreichen Mehls bis auf einen Sauerstoffpartialdruck von unter 50 hPa im proteinreichen Mehl erfolgt.

9. Verfahren nach einem der Ansprüche 1 bis 8,
**dadurch gekennzeichnet,**
**dass** der eine oder wenigstens einer der mehreren Extraktionsschritte bei pH-Werten < 8 durchgeführt wird.

10. Verfahren nach einem der Ansprüche 1 bis 9,
**dadurch gekennzeichnet,**
**dass** das Aufkonzentieren des abgetrennten Extraktes durch Ultrafiltration und/oder Diafiltration und/oder Fällung erfolgt.

11. Verfahren nach einem der Ansprüche 1 bis 10,
**dadurch gekennzeichnet,**
**dass** das Mehl mehreren Extraktionsschritten mit Wasser unterzogen wird, wobei wenigstens einer der Extraktionsschritte bei pH-Werten zwischen 5,5 und 7 und anschließend ein weiterer der Extraktionsschritte bei pH-Werten zwischen 7,5 und 9 durchgeführt wird.

12. Verfahren nach einem der Ansprüche 1 bis 11,
**dadurch gekennzeichnet,**
**dass** das proteinhaltige Mehl vor der Extraktion vermahlen wird, um eine Partikelgrößenverteilung zu erhalten, bei der ein Massenanteil von 90% der Partikel eine über Laserbeugung in n-Butanol bestimmte Partikelgröße von < 100 µm aufweist.

13. Verfahren nach einem der Ansprüche 1 bis 11,
**dadurch gekennzeichnet,**
**dass** das proteinhaltige Mehl vor der Extraktion vermahlen wird, um eine Partikelgrößenverteilung zu erhalten, bei der ein Massenanteil von 90% der Partikel eine über Laserbeugung in n-Butanol bestimmte Partikelgröße zwischen 100 µm und 2500 µm aufweist.

14. Verfahren nach einem der Ansprüche 1 bis 13,
**dadurch gekennzeichnet,**
**dass** das bereitgestellte proteinhaltige Mehl einen Restgehalt an einem bei der Entölung eingesetzten Lösungsmittel aufweist, der im Bereich zwischen 0,001 und 0,4 Mass.-% liegt.

## Claims

1. A process for producing protein preparations from sunflower seeds with at least the following steps:
- providing a protein-containing flour from dehulled and deoiled sunflower seeds with
-- a hull content <10% by mass,
-- an oil content <8% by mass,
-- a protein content >35% by mass and
- performing at least one or more extraction steps with water at a pH of more than 4 and less than 7 with the protein-containing flour, after which one or more extraction step(s) a liquid phase is obtained as an extract and a solid-rich phase is obtained as a raffinate,
- separating the extract and the raffinate, and
- concentrating and/or drying the extract and drying the raffinate,
- wherein before and/or during the one or more extraction step(s) an oxygen concentration in the water is reduced to a value <7 mg/l and/or an oxidation activity is reduced by the addition of antioxidant components to the water and/or components with reductive effect are added.

2. The process according to Claim 1,
**characterized in that**
the protein-containing flour has a protein solubility in water at pH 6 of >15% by mass and/or at pH 7 of >25% by mass relative to the protein content in the flour.

3. The process according to Claim 1 or 2,
**characterized in that**
in order to reduce the oxygen concentration in the water, the one or several extraction steps are carried out under air pressure that has been reduced to <200 hPa.

4. The process according to any one of Claims 1 to 3,
**characterized in that**
in order to reduce the oxygen concentration in the water, nitrogen, carbon dioxide, argon or another inert gas with a concentration of more than 90% by volume is blown into the water or brought into contact with the water surface before and/or during the one or more extraction step(s).

5. The process according to any one of Claims 1 to 4,
**characterized in that**
the oxygen concentration in the water is reduced by a treatment with ultrasound.

6. The process according to any one of Claims 1 to 5,
**characterized in that**
in order to reduce the oxygen concentration in the water a temperature of the water is adjusted to a value above 20 °C.

7. The process according to any one of Claims 1 to 6,
**characterized in that**
an oxygen content of the protein-rich flour is reduced before the one or more extraction step(s) by means of a vacuum or by blowing in carbon dioxide or an inert gas.

8. The process according to Claim 7,
**characterized in that**
the oxygen content in the protein-rich flour is reduced to an oxygen partial pressure below 50 hPa in the protein-rich flour.

9. The process according to any one of Claims 1 to 8,
**characterized in that**
the one, or at least one of the one or more extraction steps is performed at pH values <8.

10. The process according to any one of Claims 1 to 9,
**characterized in that**
the separated extract is concentrated by ultrafiltration and/or diafiltration and/or precipitation.

11. The process according to any one of Claims 1 to 10,
**characterized in that**
the flour is subjected to several extraction steps with water, wherein at least one of the extraction steps is performed at pH values between 5.5 and 7 and subsequently another of the extraction steps is performed at pH values between 7.5 and 9.

12. The process according to any one of Claims 1 to 11,
**characterized in that**
the protein-containing flour is ground before the extraction to obtain a particle size distribution at which a percentage by mass of 90% of the particles has a particle size <100 µm, as determined by laser diffraction in n-butanol.

13. The process according to any one of Claims 1 to 11,
**characterized in that**
the protein-containing flour is ground before the extraction to obtain a particle size distribution at which a percentage by mass of 90% of the particles has a particle size between 100 µm and 2500 µm, as determined by laser diffraction in n-butanol.

14. The process according to any one of Claims 1 to 13,
**characterized in that**
the protein-containing flour provided has a residual content of a solvent used for the deoiling which is in the range between 0.001 and 0.4% by mass.

## Revendications

1. Procédé de production de préparations protéiques à partir de graines de tournesol, comprenant au moins les étapes suivantes de :
- fourniture d'une farine protéique à partir de graines de tournesol décortiquées et déshuilées, qui présente
-- une teneur en coques < 10 % en poids,
-- une teneur en huile < 8 % en poids et
-- une teneur en protéines > 35 % en poids ; et
- l'exécution d'au moins une ou plusieurs étapes d'extraction à l'eau à un pH supérieur à 4 et inférieur à 7 avec la farine protéique, après laquelle ou lesquelles une phase liquide est obtenue comme extrait et une phase riche en matières solides est obtenue comme raffinat ;
- la séparation de l'extrait et du raffinat ; et
- la concentration et/ou le séchage de l'extrait et séchage du raffinat ;
- dans lequel, avant et/ou pendant une ou plusieurs étapes d'extraction, une concentration en oxygène dans l'eau est réduite à une valeur < 7 mg/l et/ou une activité oxydante est réduite par l'ajout de composés antioxydants et/ou de composés réducteurs.

2. Procédé selon la revendication 1, **caractérisé en ce que** la farine contenant des protéines présente une solubilité protéique dans l'eau à pH 6 > 15 % en poids et/ou à pH 7 > 25 % en poids, calculée par rapport à la teneur en protéines de la farine.

3. Procédé selon la revendication 1 ou 2, **caractérisé en ce que**, pour réduire la concentration en oxygène dans l'eau, une ou plusieurs étapes d'extraction sont exécutées à une pression atmosphérique réduite à < 200 hPa.

4. Procédé selon une quelconque des revendications 1 à 3, **caractérisé en ce que** de l'azote, du dioxyde de carbone, de l'argon ou un autre gaz inerte à une concentration supérieure à 90 % en volume est insufflé dans l'eau ou mis en contact avec la surface de l'eau avant et/ou pendant une ou plusieurs étapes d'extraction.

5. Procédé selon une quelconque des revendications 1 à 4, **caractérisé en ce que** la concentration en oxygène dans l'eau est réduite par un traitement aux ultrasons.

6. Procédé selon une quelconque des revendications 1 à 5, **caractérisé en ce que** pour réduire la concentration en oxygène dans l'eau, la température de l'eau est ajustée à une valeur supérieure à 20 °C.

7. Procédé selon une quelconque des revendications 1 à 6, **caractérisé en ce que** la teneur en oxygène de la farine riche en protéines est réduite avant une ou plusieurs étapes d'extraction, soit par mise sous vide, soit par injection de dioxyde de carbone ou d'un gaz inerte.

8. Procédé selon la revendication 7, **caractérisé en ce que** la teneur en oxygène de la farine riche en protéines est réduite à une pression partielle d'oxygène inférieure à 50 hPa dans la farine riche en protéines.

9. Procédé selon une quelconque des revendications 1 à 8, **caractérisé en ce qu'**une ou au moins une des étapes d'extraction est réalisée à des valeurs de pH inférieures à 8.

10. Procédé selon une quelconque des revendications 1 à 9, **caractérisé en ce que** la concentration de l'extrait séparé est réalisée par ultrafiltration et/ou diafiltration et/ou précipitation.

11. Procédé selon une quelconque des revendications 1 à 10, **caractérisé en ce que** la farine est soumise à plusieurs étapes d'extraction à l'eau, dans lequel au moins une des étapes d'extraction est réalisée à des valeurs de pH comprises entre 5,5 et 7 et ensuite une autre des étapes de filtration est exécutée à des valeurs de pH comprises entre 7,5 et 9.

12. Procédé selon une quelconque des revendications 1 à 11, **caractérisé en ce que** la farine contenant des protéines est moulue avant l'extraction afin d'obtenir une distribution granulométrique dans laquelle 90 % des particules en masse ont une taille de particule inférieure à 100 µm, déterminée par diffraction laser dans le n-butanol.

13. Procédé selon une quelconque des revendications 1 à 11, **caractérisé en ce que** la farine contenant des protéines est moulue avant l'extraction afin d'obtenir une distribution granulométrique dans laquelle 90 % des particules en masse ont une taille comprise entre 100 µm et 2 500 µm, déterminée par diffraction laser dans le n-butanol.

14. Procédé selon une quelconque des revendications 1 à 13, **caractérisé en ce que** la farine contenant des protéines fournie présente une teneur résiduelle en solvant utilisé pour le déshuilage comprise entre 0,001 et 0,4 % en poids.
